# EUROPÄISCHE PATENTSCHRIFT

(11) **EP 3 456 475 B1**
(45) Veröffentlichungstag und Bekanntmachung des Hinweises auf die Patenterteilung: **23.02.2022**
(21) Anmeldenummer: 18182439.2
(22) Anmeldetag: 09.07.2018
(51) Int. Cl.: B25B 23/00, B25B 15/00, B23B 49/00, B23B 51/10

(54) **DREHANTREIBBARES WERKZEUG**
ROTATING TOOL
OUTIL POUVANT ÊTRE ENTRAÎNÉ EN ROTATION

(30) Priorität: 17.07.2017 DE 102017116029
(43) Veröffentlichungstag der Anmeldung: 20.03.2019
(73) Patentinhaber: Wolfcraft GmbH, 56746 Kempenich (DE)
(72) Erfinder: Ebert, Winfried, 56745 Weibern (DE); Zerwas, Jörg, 56743 Mendig (DE)
(74) Vertreter: Grundmann, Dirk

(56) Entgegenhaltungen:
- EP-A2- 1 721 692
- DE-A1- 2 120 320
- US-A- 52 174

## Beschreibung

### Gebiet der Technik

Die Erfindung betrifft ein um eine Achse drehbares Werkzeug mit einem einen Arbeitsabschnitt aufweisenden Grundkörper und einem Anschlagelement mit einer Anschlagschulter, das an einer vorbestimmten Axialposition positionierbar ist, wobei das Werkzeug insbesondere ein Senker, Bohrer oder Schälwerkzeug ist und der Arbeitsabschnitt eine Schneidkante aufweist, wobei die Schneidkante geradlinig oder abweichend von der Geradlinigkeit verlaufen kann.

### Stand der Technik

Die EP 0 811 449 B1 zeigt verschiedene Ausführungsformen eines Anschlags an einem Stufenbohrer. So kann der Anschlag als Federring ausgebildet sein, der auf einen Zylinderabschnitt aufgeklemmt werden kann. Eine Fixierung des Anschlagrings kann auch mit einem Arretierstift erfolgen. Ein hülsenförmiges Anschlagelement kann nach innen weisende Rippen aufweisen, die mit abgefederten Rastkugeln zusammenwirken, damit der Anschlag axial verstellt werden kann.

Eine Anschlagsausführung gemäß dem Oberbegriff von Anspruch 1 ist der DE 21 20 320 A1 zu entnehmen.

Aus dem Stand der Technik sind darüber hinaus als Senker, Bohrer, Schälwerkzeug oder Bithalter bekannte drehantreibbare Werkzeuge mit einem ringförmigen Anschlagelement bekannt.

Der Erfindung liegt die Aufgabe zugrunde, ein gattungsgemäßes Werkzeug, insbesondere Schneidkantenwerkzeug herstellungstechnisch einfach gebrauchsvorteilhaft zu verbessern.

Gelöst wird die Aufgabe durch die in den Ansprüchen angegebene Erfindung.

Die Unteransprüche betreffen nicht nur vorteilhafte Weiterbildungen der im Hauptanspruch angegebenen Erfindung, sondern auch eigenständige Lösungen der Aufgabe.

Zunächst und im Wesentlichen wird vorgeschlagen, dass das Werkzeug und insbesondere ein Grundkörper des Werkzeugs eine Mehrzahl von Stützflächen aufweist, die in Axialrichtung hintereinanderliegen und die jeweils durch eine Stufe voneinander getrennt sind. An der Stufe bzw. Stützfläche kann sich das Halteelement abstützen. Die Stufe und die Stützfläche stehen in einem Winkel zueinander. Die Stützfläche kann parallel zur Achse des Mehrstufenbohrers verlaufen. Die Stufe kann sich im Wesentlichen quer dazu erstrecken. Es bildet sich somit eine im Längsquerschnitt treppenartig ausgebildete Stützflächenanordnung aus. Die einzelnen Stützflächen haben voneinander verschiedene Radialabstände zur Achse. Das Halteelement ist vorzugsweise eine Schraube. Es kann sich um eine Madenschraube handeln. Die Schraube kann mit einem Schaft in ein Innengewinde des Anschlagelementes eingeschraubt sein. Bei dem Anschlagelement kann es sich um einen hülsenförmigen Körper handeln. Das Halteelement, bspw. die Madenschraube besitzt eine Stirnfläche, die sich auf der Stützfläche abstützen kann. Die Stirnfläche kann stumpf sein. An die Stirnfläche schließt sich ein zylindrischer Schaftabschnitt an. Ein der Stirnfläche benachbarter Randabschnitt des Schaftabschnitts kann sich an der Stufe abstützen. Es ist aber auch möglich, dass der Schaftabschnitt in einer Klemmstellung, in der das Anschlagelement lagefixiert von der jeweiligen Stufe entfernt ist. Insoweit bilden die Stufen Positionierungshilfsmittel aus, um das Anschlagelement an den vorbestimmten Axialpositionen zu fixieren. Das Anschlagelement besitzt eine Anschlagschulter, die gegen die Oberfläche des Werkstücks tritt, um so die maximale Eindringtiefe eines beispielsweise Schneidkanten aufweisenden Arbeitsabschnittes in ein Werkstück reproduzierbar zu definieren. Gemäß einer Variante der Erfindung ist das Werkzeug ein Schneidkantenwerkzeug, bspw. ein Bohrer. Der Bohrer kann einen Spitzenbereich aufweisen mit einer entlang einer Kegelmantelfläche verlaufenden Schneidkante. An dem kegelförmigen Spitzenbereich kann sich ein zylinderstumpfförmiger Schneidkantenabschnitt oder ein kegelförmiger Schneidkantenabschnitt anschließen. Ein mit einer Schneidkante versehener Zylinderabschnitt kann auch zwischen zwei jeweils mit einer Schneidkante versehenen Kegelstumpfabschnitten liegen. Ein eine Schneidkante aufweisender Kegelstumpfabschnitt kann aber auch zwischen zwei jeweils eine Schneidkante aufweisenden Zylinderabschnitten liegen. Die Schneidkante kann sich über die gesamte Länge des Arbeitsabschnittes geradlinig erstrecken. Es ist aber auch vorgesehen, dass sich die Schneidkante in einer beliebigen Kontur über den Arbeitsabschnitt erstreckt, wobei sich beginnend an der Spitze mit zunehmender axialer Entfernung von der Spitze der Radialabstand der Schneidkante zur Achse des Werkzeuges vergrößert. Mittels der Stufen und der Stützfläche lässt sich das Anschlagelement an einer beliebigen Axialposition und insbesondere an Axialpositionen positionieren, an denen sich die Richtung einer nicht geradlinigen Schneidkante ändert. Die Anschlagschulter liegt in den vorbestimmten Axialpositionen insbesondere im Bereich eines Konturübergangs der Schneidkanten. Mit dem Werkzeug sind bevorzugt Senkungen fertigbar, die eine durch die Axiallage der Anschlagschulter definierbare Tiefe aufweisen. In einer Weiterbildung der Erfindung ist vorgesehen, dass die gestufte Stützfläche vom Boden einer sich in Achsrichtung erstreckenden Nut in einem Zwischenabschnitt zwischen einem Einspannende und dem Arbeitsabschnitt ausgebildet ist. Dieser Zwischenabschnitt ist im Wesentlichen zylinderförmig. Auf dem Zwischenabschnitt sitzt das bevorzugt als Hülse ausgebildete Anschlagelement und ist in Achsrichtung verschieblich und mit dem Halteelement in verschiedenen Axialstellungen am Grundkörper fixierbar. Die Stützflächen erstrecken sich in Axialrichtung über den Zwischenabschnitt. Ein durchmessergrößter Bereich des Arbeitsabschnittes kann ebenfalls als Stützfläche verwendet werden, an dem sich das Halteelement abstützt, wenn das Anschlagelement eine Stellung einnimmt, in der die Anschlagschulter ihren geringsten Abstand von der Spitze des Arbeitsendes besitzt. Ein sich an einen Zylinderabschnitt anschließender Kegelstumpfabschnitt kann eine Stufe zur Lagefixierung des Anschlagelementes gegenüber dem Grundkörper ausbilden. Der Arbeitsabschnitt kann zumindest einen Zylinderabschnitt oder einen Kegelstumpfabschnitt mit einer Schneidkante aufweisen. Die Schneidkanten können von ein oder mehreren, bevorzugt in gleichmäßiger Umfangsverteilung um die Achse angeordneten Einschnitten gebildet sein. Die Einschnitte verlaufen bevorzugt in Achsrichtung und haben eine Winkelform. In einer Weiterbildung der Erfindung ist vorgesehen, dass umfangsversetzt zu den Stufen bzw. Stützflächen eine Abflachung vorgesehen ist, die sich parallel zur Achse verlaufend erstreckt. An dieser Abflachung kann sich in einer alternativen Verwendung das Halteelement in einer geänderten Drehstellung des Anschlagelementes abstützen, um das Anschlagelement in einer beliebigen Axialposition positionieren zu können. In einer Weiterbildung der Erfindung erstreckt sich umfangsversetzt zu einer ersten Anordnung der Stufen/Stützflächen eine zweite Anordnung von durch Stufen voneinander getrennte Stützflächen, wobei die Stufen bevorzugt auf anderen Axialpositionen angeordnet sind. Hierdurch lässt sich das Anschlagelement an ersten vorbestimmten Axialpositionen anordnen, wenn das Halteelement mit ersten Stufen/Stützflächen zusammenwirkt und alternativ dazu an zweiten Axialpositionen positionieren, wenn das Halteelement mit zweiten Stufen/Stützflächen zusammenwirkt. Es kann auch eine dritte Anordnung von durch Stufen getrennte Stützflächen vorgesehen sein, die zu der ersten und der zweiten Anordnung umfangsversetzt angeordnet ist. Die zweite Anordnung oder die dritte Anordnung kann auch axial versetzt zu der ersten Anordnung angeordnet sein.

### Kurze Beschreibung der Zeichnungen

Ausführungsbeispiele der Erfindung werden nachfolgend anhand beigefügter Zeichnungen erläutert. Es zeigen:

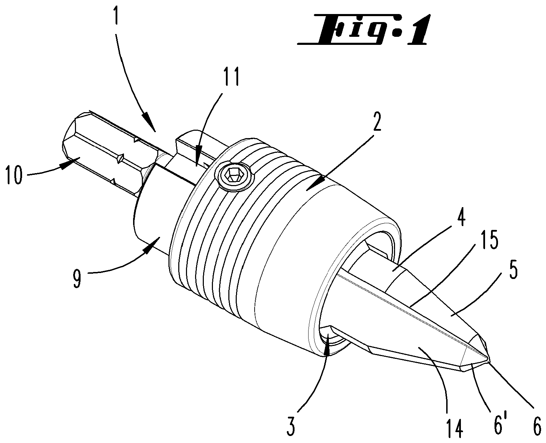

- Fig. 1: eine perspektivische Darstellung eines ersten Ausführungsbeispiels,

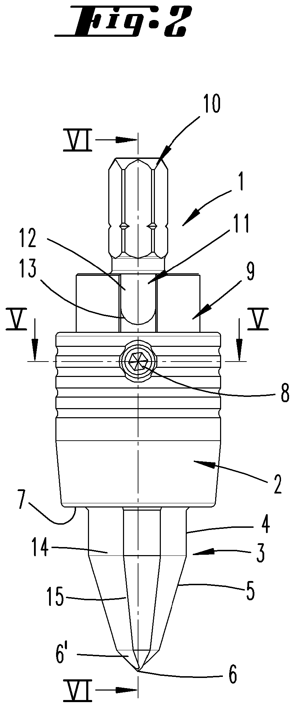

- Fig. 2: eine Seitenansicht des ersten Ausführungsbeispiels,

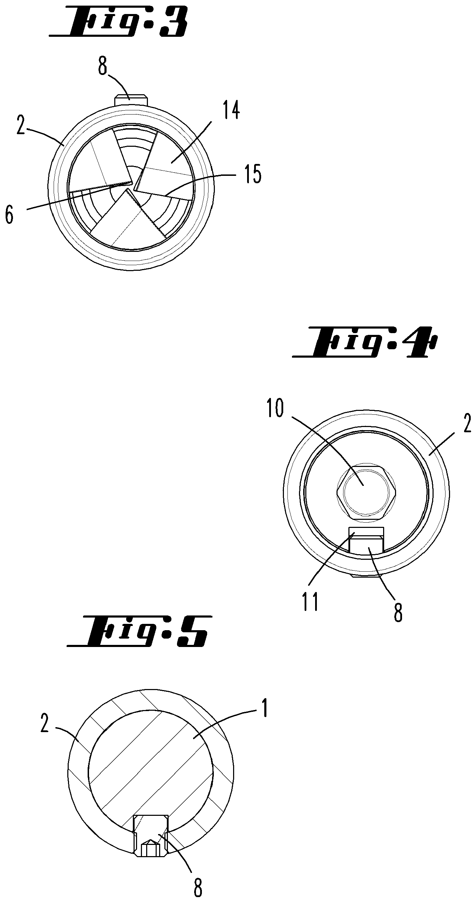

- Fig. 3: das Ausführungsbeispiel mit Blick auf die Spitze 6 des Arbeitsabschnitts 3,
- Fig. 4: das erste Ausführungsbeispiel mit Blick auf das Einspannende 10 des Grundkörpers 1,
- Fig. 5: den Schnitt gemäß der Linie V-V in Figur 2,

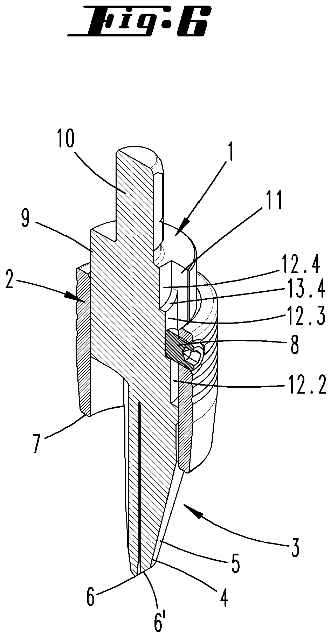

- Fig. 6: perspektivisch den Schnitt gemäß der Linie VI-VI in Figur 2,
- Fig. 7: eine Schnittdarstellung gemäß Figur 6, wobei eine Anschlaghülse 2 eine erste Axialposition gegenüber dem Grundkörper 1 einnimmt,
- Fig. 8: eine Darstellung gemäß Figur 7, wobei das Anschlagelement 2 eine zweite Axialposition einnimmt,
- Fig. 9: eine Darstellung gemäß Figur 7, wobei das Anschlagelement 2 eine dritte Axialposition gegenüber dem Grundkörper 1 einnimmt,
- Fig. 10: in einer perspektivischen Darstellung einen Grundkörper 1 eines zweiten Ausführungsbeispiels der Erfindung,
- Fig. 11: einen Schnitt gemäß der Schnittlinie XI-XI in Figur 12,
- Fig. 12: den Schnitt gemäß der Schnittlinie XII-XII in Figur 11,
- Fig. 13: den Schnitt gemäß der Schnittlinie XIII-XIII in Figur 11,
- Fig. 14: eine Darstellung gemäß Figur 10, jedoch mit auf dem Grundkörper 1 aufgesetztem Anschlagelement 2,
- Fig. 15: einen Schnitt gemäß der Linie XV-XV in Figur 16,
- Fig. 16: den Schnitt gemäß der Linie XVI-XVI in Figur 15,
- Fig. 17: den Schnitt gemäß der Linie XVII-XVII in Figur 15,
- Fig. 18: die perspektivische Darstellung eines dritten Ausführungsbeispiels,
- Fig. 19: eine Seitenansicht des dritten Ausführungsbeispiels,
- Fig. 20: den Schnitt gemäß der Schnittlinie XX-XX in Figur 19,
- Fig. 21: den Grundkörper 1 eines vierten Ausführungsbeispiels,
- Fig. 22: eine Seitenansicht des vierten Ausführungsbeispiels,
- Fig. 23: den Schnitt gemäß der Linie XXIII-XXIII in Figur 22,
- Fig. 24: den Schnitt gemäß der Linie XXIV-XXIV in Figur 22,
- Fig. 25: den Schnitt gemäß der Linie XXV-XXV in Figur 23 und
- Fig. 26: den Schnitt gemäß der Linie XXVI-XXVI in Figur 23.

### Beschreibung der Ausführungsformen

Das erste Ausführungsbeispiel besitzt einen Grundkörper 1, der aus Stahl besteht und materialeinheitlich ein Einspannende 10 in Form eines Sechskantschaftes, einen Zwischenabschnitt 9 in Form eines Kreiszylinderabschnittes und einen Arbeitsabschnitt 3 ausbildet. Das Einspannende 10 kann aber auch anders gestaltet sein, bspw. als insbesondere eine Axialnut aufweisender Rundkörper ausgebildet sein oder im Querschnitt dreieckig oder viereckig.

Der Arbeitsabschnitt 3 besitzt eine kegelförmige Spitze 6, die von einem Kegelabschnitt 6' ausgebildet ist, welche eine Schneidkante aufweist. An den Kegelabschnitt 6' schließt sich ein Kegelstumpfabschnitt 5 an. Der Kegelwinkel ist hier kleiner als beim Kegelabschnitt 6'. Der Kegelstumpfabschnitt 5 liegt zwischen dem Kegelabschnitt 6' und einem Zylinderabschnitt 4. Der Zylinderabschnitt 4 besitzt eine Schneidkante, die entlang einer Zylindermantelfläche verläuft.

Der Arbeitsabschnitt 3 besitzt zumindest einen sich im Wesentlichen in Richtung einer durch die Spitze 6 und das Einspannende 10 verlaufenden Achse A sich erstreckenden Einschnitt 14. Beim Ausführungsbeispiel sind drei in gleichmäßiger Umfangsverteilung angeordnete Einschnitt 14 vorgesehen, die Spanflächen ausbilden. Die Spanflächen treffen unter Ausbildung von Schneidkanten 15 die Kegelstumpfabschnitte 5 beziehungsweise Zylinderabschnitte 4.

Auf den Zwischenabschnitt 9 sitzt ein als Hülse ausgebildetes Anschlagelement 2 mit einer zur Spitze 6 weisenden ringförmigen Stirnfläche, die eine Anschlagschulter 7 ausbildet, die die Funktion einer Tiefenbegrenzung ausübt, wenn sie beim Verwenden des Werkzeuges gegen die Oberfläche des Werkstücks tritt.

In einer sich in Radialrichtung erstreckenden Gewindeöffnung des Anschlagelementes 2 ist eine Madenschraube 8 eingeschraubt. Die Madenschraube 8 besitzt eine stumpfe Stirnfläche, an der sich ein Gewindeabschnitt anschließt. Die Stirnfläche der Madenschraube 8 stützt sich an einer treppenförmigen Stützflächenanordnung 12 ab, die vom Boden einer sich in Richtung der Achse A erstreckenden Nut 11 ausgebildet ist. Der Boden der Nut 11 besitzt in Achsrichtung hintereinanderliegende, parallel zur Achse A verlaufende Abschnitte 12.2, 12.3, 12.4. Zwischen den von diesen Abschnitten gebildeten Stützflächen bilden sich Stufen 13.2, 13.3, 13.4 aus, die in parallel zueinander verlaufenden Ebenen sich erstrecken, wobei die Ebenen senkrecht zur Achse A verlaufen. Es sind mehrere, von rechtwinklig zueinander stehenden Flächen gebildete Stütznischen vorgesehen, an denen sich das Halteelement lagefixiert abstützen kann.

Die dem der Spitze 6 am nächsten liegende Stützfläche 12.2 besitzt den größten Radialabstand zur Achse. Die dem Einspannende 10 am Nächsten liegende Stützfläche 12.4 besitzt den geringsten Radialabstand zur Achse.

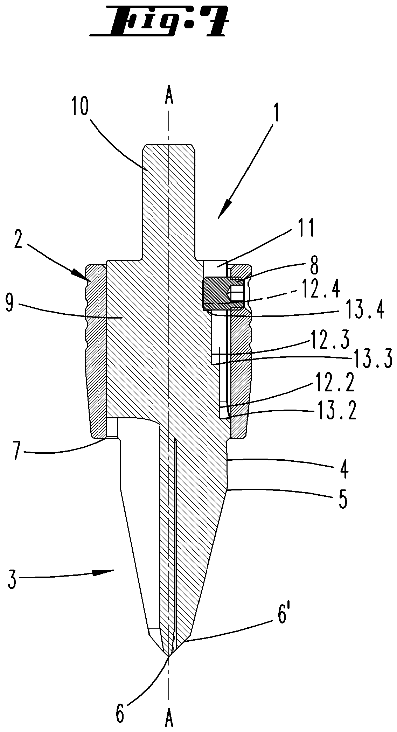

Das Werkzeug ist ein Bohrer. Die Funktionsweise des Bohrers wird nachfolgend anhand der Figuren 7 bis 9 erläutert:

Die Figur 7 zeigt eine erste Betriebsstellung, in der sich die Madenschraube 8 an der dem Einspannende 10 am nächsten liegenden Stützfläche 12.4 abstützt. Ein sich unmittelbar an die Stirnseite der Madenschraube 8 anschließender Schaftabschnitt des Außengewindes der Madenschraube 8 liegt an der Stufe 13.4 an. Die Stufe 13.4 bildet einen Axialanschlag zur Bestimmung der axialen Lage der Anschlagschulter 7 auf Höhe des Kegelstumpfabschnittes 5.4.

Mit dem Bohrer kann ein Loch gebohrt werden, welches mit dem Eindringen des Bohrers ins Werkstück vergrößert wird, bis der maximale Bohrungsdurchmesser, der durch den Durchmesser des Zylinderabschnittes 4 definiert ist, erreicht ist. Bei dem in der Figur 7 dargestellten Ausführungsbeispiel ist am Ende des Zylinderabschnittes 4 ein Übergang in einen durchmessergrößeren Bereich erkennbar, der eine schräg, gewissermaßen gestufte Schneidkante zeigt. Mit dieser Schneidkante kann in der Endphase eine Senkung in die Oberfläche des Werkstücks eingebracht werden. Die Anschlagschulter 7 muss dann in eine entsprechende Axialstellung gebracht werden, in der sich das Halteelement 8 beispielsweise an der Stützstufe 12.4 abstützt.

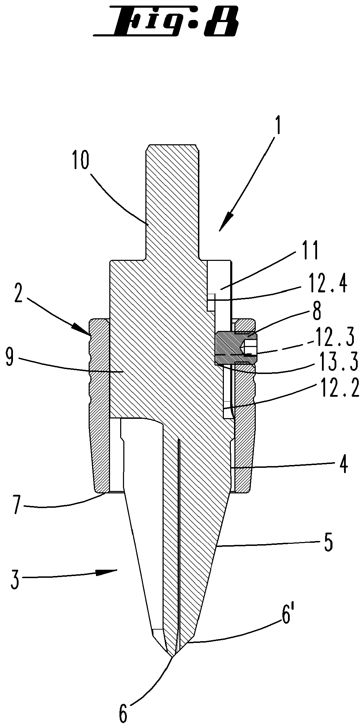

Die Figur 8 zeigt das Ausführungsbeispiel, wobei jedoch das Anschlagelement 2 eine veränderte Axialposition einnimmt. Die Madenschraube 8 stützt sich jetzt an der Stützfläche 12.3 und an der ihr zugeordneten Stufe 13.3 an, so dass der Durchmesser der Bohrung durch den Radialabstand der Schneidkante 15 im Kegelstumpfabschnitt 5 definiert ist, auf dessen Höhe die Anschlagschulter 7 liegt. Es handelt sich hierbei um den Übergang zwischen Kegelstumpfabschnitt 5 und Zylinderabschnitt 4.

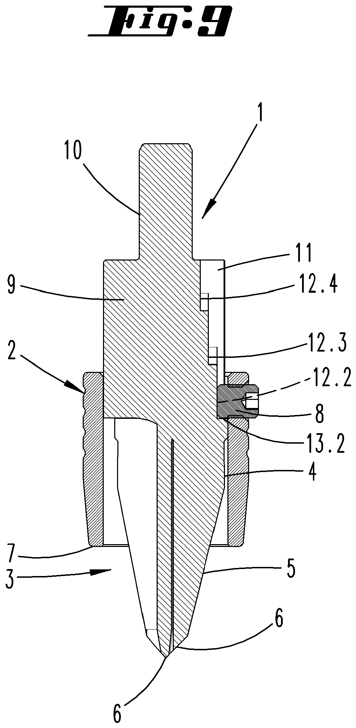

Die Figur 9 zeigt das Ausführungsbeispiel in einer dritten Stellung, bei der sich die Madenschraube 8 an der Stufe 13.2 und an der Stützfläche 12.2 abstützt, so dass der mit dem Bohrer erzielte Bohrungsdurchmesser geringer ist. Er entspricht dem Radialabstand der Schneidkante 15 von der Achse auf Höhe der Anschlagschulter 7.

Besitzt das Anschlagelement 2 eine ausreichende axial Länge, so dass es sich über die in der Figur 9 dargestellte Position hinaus in Richtung auf die Spitze 6 verschieben kann, so kann das Anschlagelement 2 eine vierte Axialposition einnehmen. Hier stützt sich das Halteelement, also im Ausführungsbeispiel die Schraube 8, auf dem Zylinderabschnitt 4 ab. Die Anschlagschulter 7 liegt hier in einem Bereich des Kegelstumpfabschnittes 5, der, verglichen mit der in Figur 9 dargestellten Position der Spitze 6 weiter angenähert ist.

In einem nicht dargestellten Ausführungsbeispiel können die Stufen 13 derart angeordnet sein, dass die Anschlagschulter 7 in den definierten Axialpositionen des Anschlagelementes 2 auf Höhe des Übergangs zwischen Kegelabschnitt 6 und Kegelmantelstumpfabschnitt 5 liegt.

In einem nicht dargestellten Ausführungsbeispiel kann sich an den Kegelabschnitt 6' ein zylindrischer Schaft mit einer wendelgangförmig verlaufenden Schneidkante anschließen. Ein derartiger Bohrer besitzt einen Nenndurchmesser, der durch den Durchmesser des Zylinderabschnittes definiert wird. Über die Stufen, mit denen die Stützflächen in Radialrichtung abgesetzt sind, kann eine Einbohrtiefe definiert werden.

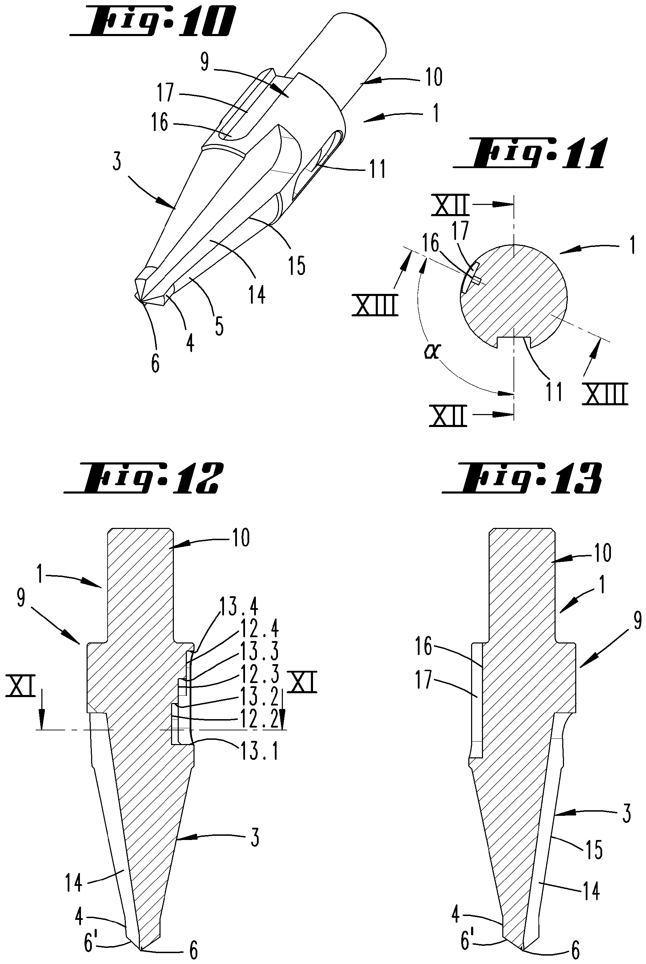

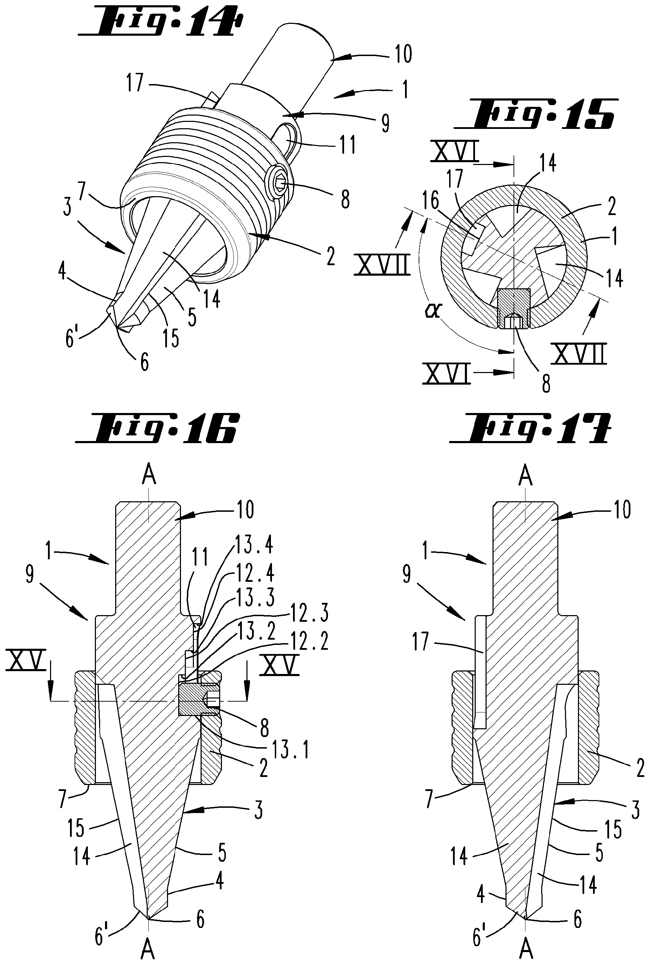

Das in den Figuren 10 bis 17 dargestellte zweite Ausführungsbeispiel ist ein Schälbohrer, der einen Arbeitsabschnitt 3 aufweist, der drei in Umfangsrichtung in gleichmäßiger Winkelaufteilung angeordnete Einschnitte 14 aufweist, die jeweils eine Schneidkante 15 ausbilden. An die Spitze 6 schließt sich zunächst ein Kegelabschnitt 6' an. An den Kegelabschnitt 6' schließt sich ein Zylinderabschnitt 4 an. An den Zylinderabschnitt 4 schließt sich ein Kegelstumpfabschnitt 5 an. Zwischen dem Arbeitsabschnitt 3, der im Wesentlichen vom Kegelstumpfabschnitt 5 geprägt wird und dem Einspannende 10, welches hier als Kreiszylinder ausgebildet ist, erstreckt sich ein Zwischenabschnitt 9, der eine sich in Achsrichtung erstreckende Nut 11 aufweist, dessen Nutboden 12 treppenartige Absätze aufweist, die von Stützflächen 12.1, 12.2 und 12.3 gebildet sind, die durch Stufen 13.2, 13.3 in Radialrichtung abgesetzt sind. Eine ein Halteelement 8 bildende Madenschraube steckt in einer Gewindeöffnung einer Anschlaghülse 2, die mit ihrer Stirnseite eine entlang einer Kreisbogenlinie verlaufende Anschlagschulter 7 ausbildet. Die Stirnseite des Halteelementes 8 kann sich wahlweise auf einer der Stützflächen 12.1, 12.2 oder 12.3 abstützen und dabei mit einem Schaftabschnitt an einer der Stufen 13.2, 13.3 anliegen.

Es ist eine zweite sich in Axialrichtung erstreckende Nut 17 vorgesehen, deren Boden eine Abflachung 16 ausbildet, die sich parallel zur Achse A erstreckt. Nach einem Lösen des Halteelementes 8 lässt sich die Anschlaghülse um einen Winkel α drehen, um den die zweite Nut 17 gegenüber der ersten Nut 11 winkelversetzt ist, so dass sich die Stirnfläche der das Halteelement 8 bildenden Madenschraube an der Abflachung 16 abstützen kann. In dieser Betriebsstellung lässt sich das Anschlagelement 2 stufenlos in Achsrichtung verstellen und festlegen.

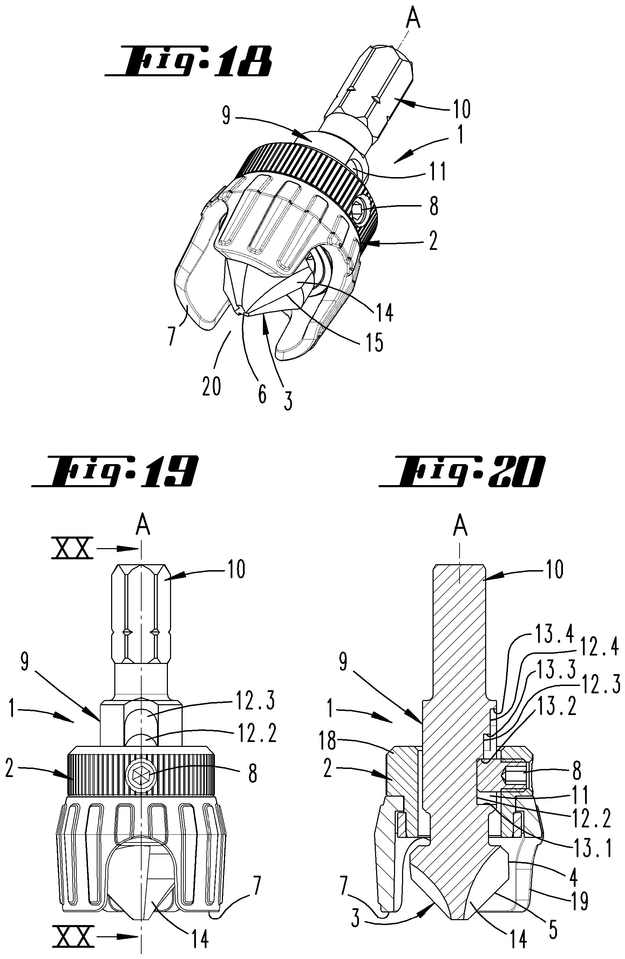

Die Figuren 18 bis 20 zeigen ein drittes Ausführungsbeispiel, bei dem der Arbeitsabschnitt 3 als Senker ausgebildet ist. Er besitzt eine Vielzahl von in Umfangsrichtung schräg zur Achse verlaufende Schneidkanten 15. Das Anschlagelement 2 besitzt hier einen Befestigungsring 18, an dem ein Anschlagkörper 19 befestigt ist. Der Anschlagkörper 19 kann sich gegenüber dem Befestigungsring 18, der mit dem Halteelement 8 am Grundkörper festlegbar ist, drehen. Die Anschlagschulter 7 wird hier von dem Anschlagkörper 19 gebildet, der Fenster 20 aufweist, mittels derer die Anschlagschulter 7 in Umfangsrichtung unterbrochen ist. Die Anschlagschulter 7 wird hier von drei voneinander getrennten Kreisbogenabschnitten ausgebildet.

Auch bei diesem Ausführungsbeispiel lässt sich die Axialposition der Anschlagschulter 7 stufenweise einstellen. Die Stirnseite des als Madenschraube ausgebildeten Halteelementes 8 kann sich wahlweise auf einer verschiedene Radialabstände zur Achse A aufweisenden Stützfläche 12.2, 12.3 oder 12.4 abstützen. Ein an die Stirnseite des Halteelements 8 angrenzender Schaftabschnitt liegt in den Axialpositionen an einer der Stufen 13.1, 13.2, 13.3, 13.4 an, wobei die Stufen 13.1 und 13.4 von den beiden Schmalseitenwänden der Nut 11 ausgebildet sind.

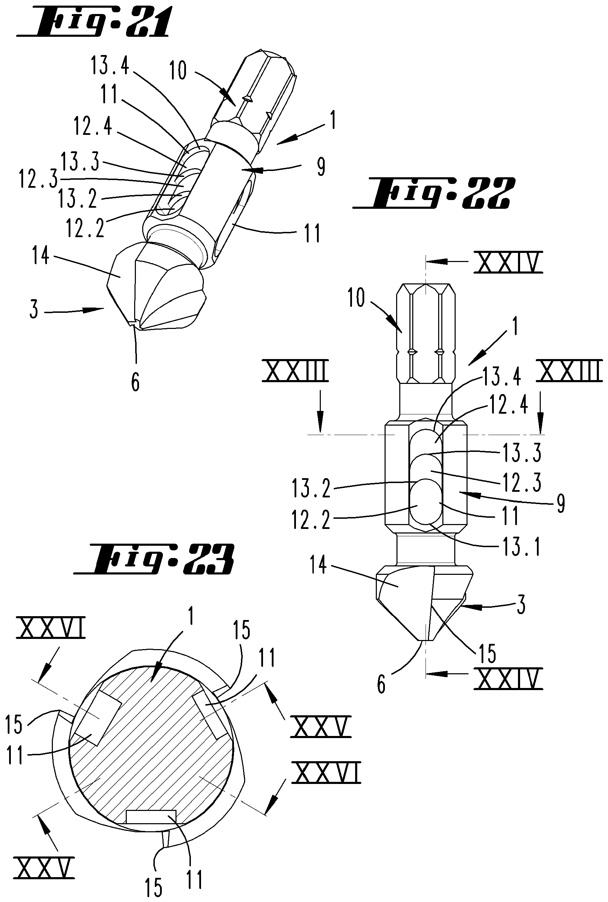

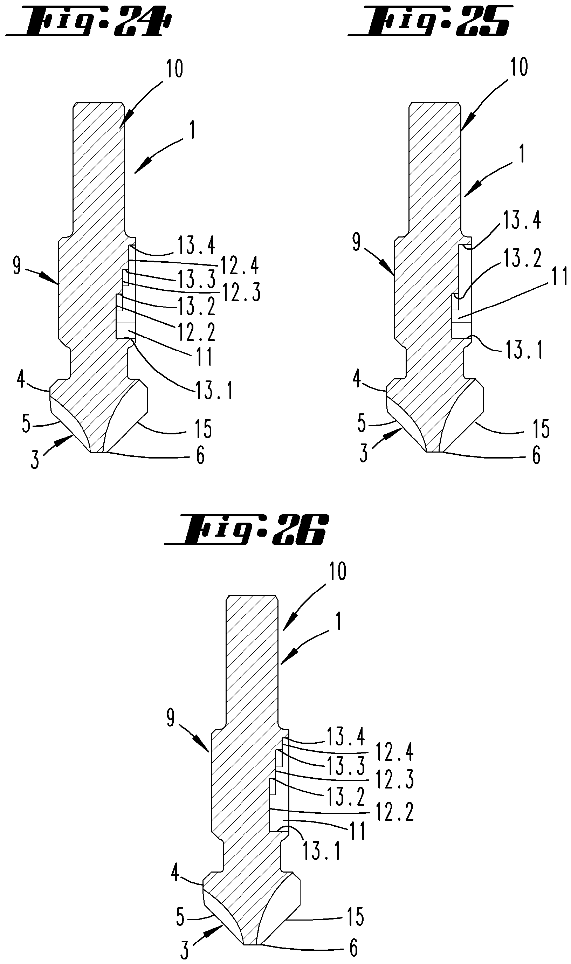

Das in den Figuren 21 bis 26 dargestellte vierte Ausführungsbeispiel unterscheidet sich von den zuvor beschriebenen Ausführungsbeispielen im Wesentlichen dadurch, dass der Zwischenabschnitt 9 mehrere, dort drei in Umfangsrichtung versetzt angeordnete Nuten 11 aufweist, die jeweils treppenförmig angeordnete Stützflächen 12.2, 12.3, 12.4 aufweist. Die Stufen 13.2 und 13.3 liegen in den jeweiligen Nuten 11 an unterschiedlichen Axialpositionen. Eine der drei Nuten 11 besitzt lediglich eine Stufe 13.2. Die Nuten 11 können sich somit durch eine unterschiedliche Anzahl von Stufen 13.2, 13.3 und/oder durch eine unterschiedliche Axialposition der Stufen 13.2, 13.3 unterscheiden.

Durch eine Änderung der Winkellage des Anschlagelementes 2 kann das Halteelement 8 in Eingriff zu einer der mehreren Nuten 11 gebracht werden.

Das Anschlagelement 2 ist derart positionierbar, dass die Anschlagschulter 7 im Übergangsbereich zwischen einem Kegelstumpfabschnitt 5 und einem Zylinderabschnitt 4 liegt, wobei der Zylinderabschnitt 4 und der Kegelstumpfabschnitt 5 jeweils eine Schneidkante 15 aufweist.

### Liste der Bezugszeichen

| | | | |
|---|---|---|---|
| 1 | Grundkörper | 16 | Abflachung |
| 2 | Anschlagelement, -hülse | 17 | Nut |
| 3 | Arbeitsabschnitt | 18 | Befestigungsring |
| 4 | Zylinderabschnitt | 19 | Anschlagkörper |
| 5 | Kegelstumpfabschnitt | 20 | Fenster |
| 6 | Spitze | | |
| 6' | Kegelabschnitt | | |
| 7 | Anschlagschulter | | |
| 8 | Schraube, Halteelement | | |
| 9 | Zwischenabschnitt | | |
| 10 | Einspannende | | |
| 11 | Nut | A | Achse |
| 12 | Nutboden, Stützfläche | | |
| 12.2 | Stützfläche | | |
| 12.3 | Stützfläche | α | Winkel |
| 12.4 | Stützfläche | | |
| 13 | Stufe | | |
| 13.1 | Stufe | | |
| 13.2 | Stufe | | |
| 13.3 | Stufe | | |
| 13.4 | Stufe | | |
| 14 | Einschnitt | | |
| 15 | Schneidkante | | |

## Patentansprüche

1. Um eine Achse (A) drehbares Werkzeug mit einem einen Arbeitsabschnitt (3) aufweisenden Grundkörper (1) und einem Anschlagelement (2) mit einer Anschlagschulter (7), das an einer vorbestimmten Axialposition positionierbar ist, mit einer Mehrzahl von in Richtung der Achse (A) hintereinander liegenden, durch Stufen (13.1, 13.2, 13.3, 13.4) voneinander getrennten Stützflächen (12.2, 12.3, 12.4) des Grundkörpers (1) und einem Halteelement (8) des Anschlagelementes (2), das sich in den Axialpositionen jeweils an einer der Stufen (13.1, 13.2, 13.3, 13.4) und der Stützflächen (12.2, 12.3, 12.4) abstützt, **dadurch gekennzeichnet, dass** die Stützflächen (12.2, 12.3, 12.4) von einem Boden einer Axialnut (11) ausgebildet sind.

2. Werkzeug nach Anspruch 1, **dadurch gekennzeichnet, dass** die Stützflächen (12.2, 12.3, 12.4) parallel zur Achse (A) verlaufen und jeweils voneinander verschiedene Radialabstände zur Achse (A) besitzen.

3. Werkzeug nach einem der vorhergehenden Ansprüche, **dadurch gekennzeichnet, dass** die Stufen (13.1,13.2,13.3,13.4) im Wesentlichen quer zur Achse (A) verlaufen.

4. Werkzeug nach einem der vorhergehenden Ansprüche, **dadurch gekennzeichnet, dass** das Halteelement (8) eine in ein Innengewinde des Stützelementes eingeschraubte Schraube ist, deren Stirnfläche an der Stützfläche (12.2,12.3,12.4) anliegt.

5. Werkzeug nach einem der vorhergehenden Ansprüche, **gekennzeichnet durch** eine zumindest eine Schneidkante (15) aufweisenden Arbeitsabschnitt (3), wobei die Anschlagschulter (7) auf voneinander verschiedenen axialen Höhen der Schneidkante (15) positionierbar ist.

6. Werkzeug nach Anspruch 5, **dadurch gekennzeichnet, dass** der Arbeitsabschnitt einen eine Spitze (6) ausbildenden Kegelabschnitt (6') und einen sich daran anschließenden Zylinderabschnitt (4) oder Kegelstumpfabschnitt (5) aufweist.

7. Werkzeug nach Anspruch 6, **dadurch gekennzeichnet, dass** sich an den Zylinderabschnitt (4) ein Kegelstumpfabschnitt (5) anschließt und/oder dass sich an den Kegelstumpfabschnitt (5) ein Zylinderabschnitt (4) anschließt.

8. Werkzeug nach einem der vorhergehenden Ansprüche, **dadurch gekennzeichnet, dass** die Anschlagschulter (7) eine insbesondere sich auf einer Kreisbogenlinie erstreckende Stirnseite einer das Anschlagelement (2) bildenden Hülse ist, die axial verschieblich auf einem im Wesentlichen zylindrischen Zwischenabschnitt (9) des Grundkörpers (1) angeordnet ist, welcher Zwischenabschnitt (9) zwischen einem Einspannende (10) und dem Arbeitsabschnitt (3) angeordnet ist.

9. Werkzeug nach einem der vorhergehenden Ansprüche, **dadurch gekennzeichnet, dass** das Werkzeug ein Senker, Bohrer oder Schälwerkzeug ist.

10. Werkzeug nach einem der Ansprüche 5 bis 9, **dadurch gekennzeichnet, dass** die Schneidkanten (15) von zumindest einem sich in Axialrichtung erstreckenden Einschnitt (14) ausgebildet sind.

11. Werkzeug nach einem der vorhergehenden Ansprüche, **gekennzeichnet durch** eine umfangsversetzt zu den Stufen (13.1, 13.2, 13.3, 13.4) angeordnete Abflachung (16) oder zweite Anordnung von durch Stufen (13.1, 13.2, 13.3, 13.4) voneinander getrennten Stützflächen (12.2, 12.3, 12.4).

## Claims

1. Tool which is rotatable about an axis (A) and comprises a main body (1), which has a working portion (3), and a stop element (2), which has a stop shoulder (7) that can be positioned at a predetermined axial position, with a plurality of support surfaces (12.2, 12.3, 12.4) of the base body (1), which surfaces are positioned one behind the other in the direction of the axis (A) and separated from one another by steps (13.1, 13.2, 13.3, 13.4) and a holding element (8) of the stop element (2) which, in the axial positions, abuts one of the steps (13.1, 13.2, 13.3, 13.4) and support surfaces (12.2, 12.3, 12.4) in each case, **characterised in that** the support surfaces (12.2, 12.3, 12.4) are formed by a bottom of an axial groove (11).

2. Tool according to claim 1, **characterised in that** the support surfaces (12.2, 12.3, 12.4) extend parallel to the axis (A) and each have mutually different radial distances from the axis (A).

3. Tool according to either of the preceding claims, **characterised in that** the steps (13.1, 13.2, 13.3, 13.4) extend substantially transversely to the axis (A).

4. Tool according to any of the preceding claims, **characterised in that** the holding element (8) is a screw screwed into an internal thread of the support element, the end surface of which screw abuts the support face (12.2, 12.3, 12.4).

5. Tool according to any of the preceding claims, **characterised by** a working portion (3) having at least one cutting edge (15), it being possible to position the stop shoulder (7) at mutually different axial heights of the cutting edge (15).

6. Tool according to claim 5, **characterised in that** the working portion has a cone portion (6') that forms a tip (6), and an adjoining cylinder portion (4) or truncated cone portion (5).

7. Tool according to claim 6, **characterised in that** a truncated cone portion (5) adjoins the cylinder portion (4) and/or **in that** a cylinder portion (4) adjoins the truncated cone portion (5).

8. Tool according to any of the preceding claims, **characterised in that** the stop shoulder (7) is an end face, in particular extending in a circular arc, of a sleeve that forms the stop element (2), which sleeve is arranged on a substantially cylindrical intermediate portion (9) of the main body (1) so as to be axially movable, which intermediate portion (9) is arranged between a clamping end (10) and the working portion (3).

9. Tool according to any of the preceding claims, **characterised in that** the tool is a core drill, drill or rough-turning tool.

10. Tool according to any of claims 5 to 9, **characterised in that** the cutting edges (15) are formed by at least one cut (14) extending in the axial direction.

11. Tool according to any of the preceding claims, **characterised by** a flat region (16) arranged so as to be circumferentially offset to the steps (13.1, 13.2, 13.3, 13.4) or by a second arrangement of support surfaces (12.2, 12.3, 12.4) separated from one another by steps (13.1, 13.2, 13.3, 13.4).

## Revendications

1. Outil pouvant tourner autour d'un axe (A), avec un corps de base (1) comprenant une partie de travail (3) et un élément de butée (2) avec un épaulement de butée (7), qui peut être positionné dans une position axiale prédéterminée, avec une pluralité de surfaces de support (12.2, 12.3, 12.4) du corps de base (1) situées les unes derrière les autres dans la direction de l'axe (A) et séparées les unes des autres par des marches (13.1, 13.2, 13.3, 13.4) et un élément de maintien (8) de l'élément de butée (2) qui vient dans les positions axiales en appui à chaque fois sur l'une des marches (13.1, 13.2, 13.3, 13.4) et des surfaces de support (12.2, 12.3, 12.4), **caractérisé en ce que** les surfaces de support (12.2, 12.3, 12.4) sont formées par un fond d'une rainure axiale (11).

2. Outil selon la revendication 1, **caractérisé en ce que** les surfaces de support (12.2, 12.3, 12.4) sont parallèles à l'axe (A) et présentent respectivement des distances radiales par rapport à l'axe (A) différentes les unes des autres.

3. Outil selon l'une des revendications précédentes, **caractérisé en ce que** les marches (13.1, 13.2, 13.3, 13.4) s'étendent sensiblement transversalement à l'axe (A).

4. Outil selon l'une des revendications précédentes, **caractérisé en ce que** l'élément de maintien (8) est une vis vissée dans un filetage interne de l'élément de support, dont la face d'extrémité s'appuie contre la surface de support (12.2, 12.3, 12.4).

5. Outil selon l'une des revendications précédentes, **caractérisé par** une partie de travail (3) comprenant au moins une arête de coupe (15), dans lequel l'épaulement de butée (7) peut être positionné à des hauteurs axiales de l'arête de coupe (15) différentes les unes des autres.

6. Outil selon la revendication 5, **caractérisé en ce que** la partie de travail comprend une partie conique (6') formant une pointe (6) et une partie cylindrique (4) ou une partie tronconique (5) s'y raccordant.

7. Outil selon la revendication 6, **caractérisé en ce qu'**une partie tronconique (5) se raccorde à la partie cylindrique (4) et/ou qu'une partie cylindrique (4) se raccorde à la partie tronconique (5).

8. Outil selon l'une des revendications précédentes, **caractérisé en ce que** l'épaulement de butée (7) est une face d'extrémité, s'étendant en particulier sur une ligne d'arc de cercle, d'un manchon formant l'élément de butée (2), qui est disposée de manière axialement déplaçable sur une partie intermédiaire (9) sensiblement cylindrique du corps de base (1), laquelle partie intermédiaire (9) est disposée entre une extrémité de serrage (10) et la partie de travail (3).

9. Outil selon l'une des revendications précédentes, **caractérisé en ce que** l'outil est un outil de fraisage, de perçage ou de pelage.

10. Outil selon l'une des revendications 5 à 9, **caractérisé en ce que** les arêtes de coupe (15) sont formées par au moins une indentation (14) s'étendant en direction axiale.

11. Outil selon l'une des revendications précédentes, **caractérisé par** un aplatissement (16) disposé en décalage circonférentiel par rapport aux marches (13.1, 13.2, 13.3, 13.4) ou un deuxième agencement de surfaces de support (12.2, 12.3, 12.4) séparées les unes des autres par des marches (13.1, 13.2, 13.3, 13.4).
